(19) Europäisches Patentamt
European Patent Office
Office européen des brevets

(11) EP 3 067 386 A1

(12) EUROPEAN PATENT APPLICATION
published in accordance with Art. 153(4) EPC

(43) Date of publication:
14.09.2016 Bulletin 2016/37

(51) Int Cl.:
C08K 3/18 (2006.01)     A01G 9/14 (2006.01)
C01F 7/00 (2006.01)     C09K 3/00 (2006.01)

(21) Application number: 13897143.7

(22) Date of filing: 06.11.2013

(86) International application number:
PCT/JP2013/080613

(87) International publication number:
WO 2015/068312 (14.05.2015 Gazette 2015/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Kyowa Chemical Industry Co., Ltd
Takamatsu-shi, Kagawa 761-0113 (JP)

(72) Inventors:
• SUZUKAWA, Yukie
Sakaide-shi
Kagawa 762-0012 (JP)

• TSUZUKI, Shingo
Sakaide-shi
Kagawa 762-0012 (JP)

(74) Representative: Raynor, Stuart Andrew
J A Kemp
14 South Square
Gray's Inn
London WC1R 5JJ (GB)

(54) **RESIN COMPOSITION AND AGRICULTURAL FILM**

(57)     A resin composition which exhibits an excellent heat-retaining property without reducing transparency when it is used as an agricultural film.

The resin composition comprises 100 parts by weight of a resin and 1 to 20 parts by weight of a heat-retaining agent which is represented by the following formula (1) and has a difference between the molar ratio obtained from 2θ of the (110) plane by an X-ray diffraction method and the molar ratio obtained by chemical analysis of not more than 0.7 7 (the molar ratio is an $Mg/Al_2$ value).

$$Mg_XAl_2(OH)_{2X+4}(CO_3) \cdot mH_2O \qquad (1)$$

(In the above formula, X satisfies $4.0 < X \leqq 6.5$, and "m" is 0 or a positive number.)

EP 3 067 386 A1

**Description**

TECHNICAL FIELD

The present invention relates to a resin composition and an agricultural film.

BACKGROUND ART

It is desired that an agricultural film used for the greenhouse cultivation or tunnel cultivation of crops should have translucency and a heat-retaining property. That is, the temperature in the greenhouse or tunnel which is elevated by daylight irradiation is reduced by the transmission and diffusion of infrared rays (heat rays) emitted from the surface of the ground or plants through the film during the night.

Therefore, to prevent this disadvantageous cooling, the transmission and diffusion of infrared rays from the greenhouse or the tunnel through the agricultural film should be prevented as much as possible. To prevent the diffusion, it has been proposed that an infrared absorbent having the ability of absorbing an infrared region should be contained in the agricultural film.

For example, there is proposed an agricultural film made of a composition comprising 100 parts by weight of an olefin resin and 1 to 15 parts by weight of dried silica gel (Patent Document 1). There is also proposed an agricultural film having high visible light transmission, high infrared absorbability at an infrared region of about 5 to 50 $\mu$m and a heat-retaining property by preventing the transmission and diffusion of infrared rays, which is produced by blending hydrotalcite having excellent heat stability, dispersibility and affinity into a polyvinyl chloride-based agricultural film (Patent Document 2). There is further proposed an agricultural film comprising surface-treated hydrotalcite as a heat-retaining agent (Patent Document 3). There is still further proposed an agricultural film comprising hydrotalcite particles having an oil absorption of not more than 35 mL/100 g and an oil absorption/plate surface diameter value of 140 to 190 as a heat-retaining agent (Patent Document 4). However, all of these proposals are unsatisfactory.

    (Patent Document 1) JP-A 54-60347
    (Patent Document 2) JP-A 63-118374
    (Patent Document 3) JP-A 2006-124229
    (Patent Document 4) JP-A 2011-68877

DISCLOSURE OF THE INVENTION

It is an object of the present invention to provide a resin composition which exhibits an excellent heat-retaining property without reducing the transparency of a resin when it is used as an agricultural film.

The inventors of the present invention found that when the difference between the molar ratio obtained from $2\theta$ of the (110) plane by an X-ray diffraction method and the molar ratio obtained by chemical analysis of a hydrotalcite particle represented by the following formula (1) is not more than 0.7, an excellent heat-retaining property and transparency are obtained by blending this hydrotalcite particle into a resin.

That is, the present invention is a resin composition comprising 100 parts by weight of a resin and 1 to 20 parts by weight of a heat-retaining agent, wherein the heat-retaining agent is represented by the following formula (1) and has a difference between the molar ratio obtained from $2\theta$ of the (110) plane by the X-ray diffraction method and the molar ratio obtained by chemical analysis of not more than 0.7 (the molar ratio is an Mg/Al$_2$ value).

$$Mg_XAl_2(OH)_{2X+4}(CO_3)\cdot mH_2O \qquad (1)$$

(In the above formula, X satisfies $4.0 < X \leqq 6.5$, and "m" is 0 or a positive number.)

Further, the present invention is an agricultural film made of the above resin composition.

Still further, the present invention is a method of using a heat-retaining agent which is represented by the following formula (1) and has a difference between the molar ratio obtained from $2\theta$ of the (110) plane by the X-ray diffraction method and the molar ratio obtained by chemical analysis of not more than 0.7 as a heat-retaining agent for agricultural films (the molar ratio is an Mg/Al$_2$ value).

$$Mg_XAl_2(OH)_{2X+4}(CO_3)\cdot mH_2O \qquad (1)$$

(In the above formula, X satisfies $4.0 < X \leqq 6.5$, and "m" is 0 or a positive number.)

BRIEF DESCRIPTION OF THE DRAWINGS

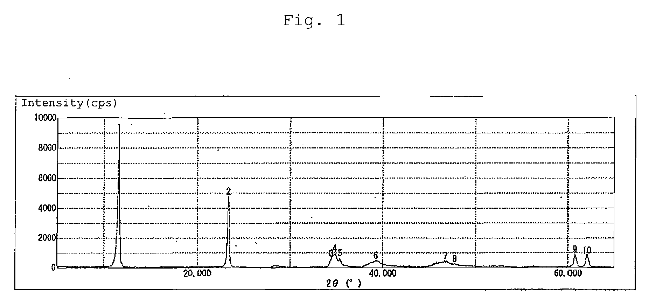

Fig. 1 shows the X-ray diffraction peak pattern of a hydrotalcite particle.

BEST MODE FOR CARRYING OUT THE INVENTION

<heat-retaining agent>

The heat-retaining agent in the present invention is a hydrotalcite particle which is represented by the following formula (1) and has a difference between the molar ratio obtained from $2\theta$ of the (110) plane by an X-ray diffraction method and the molar ratio obtained by chemical analysis of not more than 0.7. The molar ratio is an $Mg/Al_2$ value.

$$Mg_XAl_2(OH)_{2X+4}(CO_3).mH_2O \qquad (1)$$

In the above formula, X satisfies $4.0 < X \leqq 6.5$, preferably $4.3 \leqq X \leqq 6.3$, more preferably $4.5 \leqq X \leqq 6.0$. "m" is 0 or a positive number. "m" is preferably 0 to 5, more preferably 0 to 4. X is an $Mg/Al_2$ value obtained by chemical analysis.
Part of the octahedral structure of brucite of the hydrotalcite particle is constituted by a combination of trivalent metal ions such as Al, and the peak pattern of X-ray diffraction is as shown in Fig. 1. A unit lattice $a_0$ which is obtained from the (110) plane of this X-ray diffraction peak pattern is changed by the radii of metal elements constituting the octahedral structure, and the molar ratio of the hydrotalcite can be calculated by obtaining the distance of $a_0$. In the case of hydrotalcite comprising Mg-Al, the molar ratio can be represented by the following equation (2).

$$3.147 - a_0 = 0.33543y \qquad (2)$$

$a_0$: distance of unit lattice obtained by XRD

$$y = Al/(Al+Mg)$$

"y" can be obtained from $a_0$ calculated from the X-ray diffraction angle by using the above equation (2), and the molar ratio can be obtained from "y".
The difference in molar ratio is not more than 0.7, preferably not more than 0.5, more preferably not more than 0.4. When the difference in molar ratio is larger than 0.7, desired transparency is not obtained.
The average secondary particle diameter of the heat-retaining agent is preferably 0.1 to 3.0 $\mu$m, more preferably 0.2 to 1.5 $\mu$m. The BET specific surface area of the heat-retaining agent is preferably 5 to 50 m$^2$/g, more preferably 5 to 30 m$^2$/g. When the average secondary particle diameter is smaller than 0.1 $\mu$m or the specific surface area is larger than 50 m$^2$/g, it may be difficult to disperse the heat-retaining agent into the resin and when the average secondary particle diameter is larger than 3.0 $\mu$m, the transparency of the film may degrade by kneading into the resin.
As the heat-retaining agent, hydrotalcite particles prepared by baking hydrotalcite particles at 200 to 350°C to remove crystalline water may be used.
The method and conditions for producing the hydrotalcite particles are not limited at all. Raw materials and production conditions for obtaining the hydrotalcite particles are known per se, and the hydrotalcite particles can be basically produced by known methods (refer, for example, to JP-B 46-2280 and its corresponding US Patent No. 3650704, JP-B 47-32198 and its corresponding US Patent No. 3879525, JP-B 50-20039, JP-B 48-29477 and JP-B 51-29129).
Meanwhile, typical examples of the raw materials which are used to mass-produce the hydrotalcite particles on an industrial scale include aluminum sulfate and aluminum hydroxide as aluminum sources, magnesium chloride (brine or ion bittern) as a magnesium source, sodium hydroxide as an alkali source and sodium carbonate as an interlayer anion raw material but not limited thereto.
The heat-retaining agent is preferably subjected to a surface treatment. The surface treating agent is at least one selected from the group consisting of higher fatty acids, anionic surfactants, phosphoric acid esters, coupling agents (silane-based, titanate-based and aluminum-based coupling agents), esters of a polyhydric alcohol and a fatty acid, acrylic polymers and silicone treating agents.
The higher fatty acids are higher fatty acids having 10 or more carbon atoms such as stearic acid, erucic acid, palmitic acid, lauric acid and behenic acid. Alkali metal salts of the above higher fatty acids are also included. The anionic surfactants include sulfuric acid ester salts of a higher alcohol such as stearyl alcohol or oleyl alcohol, sulfuric acid ester salts of a polyethylene glycol ether, amide bonded sulfuric acid ester salts, ester bonded sulfuric acid ester salts, ester bonded sulfonates, amide bonded sulfonic acid salts, ether bonded sulfonic acid salts, ether bonded alkyl aryl sulfonic acid salts, ester bonded alkyl aryl sulfonic acid salts and amide bonded alkyl aryl sulfonic acid salts. The phosphoric acid esters include acid type and alkali metal salts and amine salts of a mono- or di-ester of orthophosphoric acid and oleyl alcohol or stearyl alcohol, or a mixture thereof. The silane-based coupling agents include vinyl ethoxysilane, vinyl-tris(2-methoxy-ethoxy)silane, gamma-methacryloxypropyltrimethoxysilane, gamma-aminopropyltrimethoxysilane, beta-(3,4-epoxycyclohexyl)ethyltrimethoxysilane, gamma-glycidoxypropyltrimethoxysilane and gamma-mercaptopropyltrimethoxysilane. The titanate-based coupling agents include isopropyl triisostearoyl titanate, isopropyl tris(dioctylpyrophosphate)titanate, isopropyl tri(N-aminoethyl-aminoethyl)titanate and isopropyl tridecylbenzene sulfonyl titanate. The esters of a polyhydric alcohol and a fatty acid include aluminum-based coupling agents such as acetoalkoxyaluminum diisopropyrate, glycerin monostearate and glycerin monooleate.

To coat the surface of each hydrotalcite particle with a surface treating agent, a wet or dry process known per se may be employed. For example, as the wet process, a surface treating agent in a liquid or emulsion form is added to hydrotalcite slurry and fully mixed with the slurry mechanically at a temperature of up to about 100°C. As the dry process, a surface treating agent in a liquid, emulsion or solid form is added to a hydrotalcite powder under agitation and fully mixed with the powder with a mixer such as a Henschel mixer under heating or non-heating. The amount of the surface treating agent may be suitably selected but preferably about not more than 10 wt% based on the weight of the heat-retaining agent used in the present invention. To enhance the acid resistance of the heat-retaining agent, the surface of the hydrotalcite particle can be coated with an inorganic compound having acid resistance. The inorganic compound having acid resistance is an oxide or hydroxide of at least one element selected from the group consisting of silicon, aluminum, titanium, zirconia, zinc and boron. The acid-resistant coating agent is used in an amount of preferably not more than 2 wt% based on the heat-retaining agent. The coated surface of the heat-retaining agent may be subjected to a surface treatment with at least one of the above surface treating agents as required.

Means such as rinsing, dehydration, granulation, drying, grinding and classification are suitably selected and carried out on the surface treated heat-retaining agent as required to obtain a final product.

<resin composition>

The resin composition of the present invention comprises 100 parts by weight of a resin and 1 to 20 parts by weight, preferably 1 to 15 parts by weight of the above heat-retaining agent. When the content of the heat-retaining agent is lower than 1 part by weight, its effect as a heat-retaining agent is small and when the content is higher than 20 parts by weight, transparency degrades and the physical properties of the resin composition deteriorate.

The inventors of the present invention found during research into an excellent heat-retaining agent that when 10 parts by weight of the heat-retaining agent is kneaded into 100 parts by weight of the resin, a film having a heat-retaining index obtained from a Kaiser area of not less than 60 and a haze which is not 35 % or more higher than the haze of a film containing no heat-retaining agent is obtained as an excellent agricultural film. They further found that a heat-retaining agent achieving this object is a hydrotalcite particle which is represented by the above formula (1) and has a difference between the molar ratio obtained from $2\theta$ of the (110) plane by the X-ray diffraction method and the molar ratio obtained by chemical analysis of not more than 0.7.

Any resin is acceptable if it is used as a film, as exemplified by thermoplastic resins such as polymers and copolymers of an olefin ($\alpha$-olefin) having 2 to 8 carbon atoms including polyethylene, polypropylene, ethylene/propylene copolymers, polybutene and poly·4-methylpentene-1, copolymers of these olefins and dienes, ethylene-acrylate copolymer, polystyrene, ABS resin, AAS resin, AS resin, MBS resin, ethylene/vinyl chloride copolymer resin, ethylene vinyl acetate copolymer resin, ethylene-vinyl chloride-vinyl acetate graft polymer resin, vinylidene chloride, polyvinyl chloride, chlorinated polyethylene, chlorinated polypropylene, vinyl chloride propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate and methacrylic resin.

Out of these thermoplastic resins, preferred are polyolefins and copolymers thereof such as polypropylene-based resins including polypropylene homopolymer and ethylene propylene copolymers, polyethylene-based resins including high-density polyethylene, low-density polyethylene, linear low-density polyethylene, ultralow-density polyethylene, EVA (ethylene vinyl acetate resin), EEA (ethylene ethyl acrylate resin), EMA (ethylene methyl acrylate copolymer resin), EAA (ethylene acrylic acid copolymer resin) and super-high-molecular weight polyethylene, and polymers and copolymers of an olefin ($\alpha$-ethylene) having 2 to 6 carbon atoms such as polybutene and poly·4-methylpentene-1.

<film>

The present invention includes a film made of the above resin composition.

<method of improving heat-retaining property>

The present invention includes a method of improving the heat-retaining property of a film made of a resin composition comprising a resin and a heat-retaining agent, wherein a heat-retaining agent which is represented by the following formula (1) and has a difference between the molar ratio obtained from $2\theta$ of the (110) plane by the X-ray diffraction method and the molar ratio obtained by chemical analysis of not more than 0.7 is used as the heat-retaining agent (the molar ratio is an $Mg/Al_2$ value).

$$Mg_XAl_2(OH)_{2X+4}(CO_3)\cdot mH_2O \qquad (1)$$

(In the above formula, X satisfies $4.0 < X \leqq 6.5$, and "m" is 0 or a positive number.)

<use method>

The present invention includes a method of using a heat-retaining agent which is represented by the following formula (1) and has a difference between the molar ratio obtained from $2\theta$ of the (110) plane by the X-ray diffraction method and the molar ratio obtained by chemical analysis of not more than 0·7 as a heat-retaining agent for agricultural films (the molar ratio is an $Mg/Al_2$ value).

$$Mg_XAl_2(OH)_{2X+4}(CO_3)\cdot mH_2O \qquad (1)$$

(In the above formula, X satisfies $4.0 < X \leqq 6.5$, and "m" is 0 or a positive number.)

EXAMPLES

The following examples are provided for the purpose of further illustrating the present invention but are in no way to be taken as limiting. In the examples, (a) average secondary particle diameter, (b) BET specific surface area, (c) molar ratio obtained by chemical analysis and (d) molar ratio obtained by an X-ray diffraction method of the hydrotalcite particles and (e) heat-retaining index and (f) haze of the agricultural film were measured by the following methods.

(a) Average secondary particle diameter

This was measured by using the MICROTRAC particle size analyzer (manufactured by NIKKISO Co., Ltd., MT3000II series). 700 mg of sample powders was added to and dispersed into 70 mL of water by applying ultrasonic waves (manufactured by NISSEI Corporation, MODEL US-300, current of 280 $\mu$A) for 3 minutes, 2 to 4 mL of the obtained suspension was collected and added to the sample chamber of the above particle size analyzer containing 250 mL of degassed water, the analyzer was operated to circulate the suspension for 2 minutes, and then the particle size distribution of the sample powders was measured. This measurement was made 2 times in total to calculate the arithmetic average value of 50 % cumulative secondary particle diameters obtained by the measurements as the average secondary particle diameter of the sample.

(b) BET specific surface area

This was measured by a nitrogen adsorption method.

(c) Molar ratio obtained by chemical analysis

The sample was dissolved in an acid to measure the contents of Mg and Al in the resulting solution by chelatometric titration.

(d) Molar ratio obtained by X-ray diffraction method

The angle of the (110) plane was read from the XRD pattern of hydrotalcite to calculate the molar ratio of the hydrotalcite from $2\theta$.

(e) Heat-retaining index

A 100 $\mu$m-thick film was formed to measure its absorption pattern by FT-IR so as to calculate the heat-retaining index from absorption intensity at 200 cm$^{-1}$ to 400 cm$^{-1}$.

(f) Haze

The haze of a 100 $\mu$m-thick film was measured by using the haze meter of Nippon Denshoku Industries Co., Ltd.

Synthesis Example 1 (hydrotalcite particles)

240 mL of a 1.5 mol/L aqueous solution of magnesium chloride and 120 mL of a 1 mol/L aqueous solution of liquid aluminum chloride were prepared in a glass beaker, and these solutions and a mixed solution prepared by mixing together 120 mL of a 8 mol/L aqueous solution of sodium hydroxide and 60 mL of a 1 mol/L aqueous solution of sodium carbonate were injected into a 1 L reactor containing a small amount of water at the same time under agitation so that the above aqueous solutions disappeared at the same time and the pH value became 9.5 so as to obtain a reaction product. 700 mL of the obtained reaction product was subjected to a hydrothermal treatment at 130°C for 6 hours. After it was cooled, the whole amount of the reaction product was taken out and heated at 80°C, a 80°C aqueous solution containing 1.55 g of sodium stearate prepared in advance was added to the reaction product under agitation little by little, and the resulting mixture was kept for 30 minutes. Thereafter, solid-liquid separation was carried out by a nutsche filter, the obtained solid was rinsed with 800 mL of ion exchange water, and the obtained cake was dried at 105°C for 18 hours. The obtained dried product was ground with a hammer mill and sifted with a 150 $\mu$m filter.

The chemical formula of the obtained hydrotalcite particles was $Mg_{5.9}Al_2(CO_3)(OH)_{15.9} \cdot 4.0H_2O$. Table 1 shows the average secondary particle diameter, BET specific surface area and difference in molar ratio.

Synthesis Example 2 (hydrotalcite particles)

192 mL of a 1.5 mol/L aqueous solution of magnesium chloride and 120 mL of a 1 mol/L aqueous solution of liquid aluminum chloride were prepared in a glass beaker, and these solutions and a mixed solution prepared by mixing together 85 mL of a 8 mol/L aqueous solution of sodium hydroxide and 60 mL of a 1 mol/L aqueous solution of sodium carbonate were injected into a 1 L reactor containing a small amount of water at the same time under agitation so that the above aqueous solutions disappeared at the same time and the pH value became 9. 5 so as to obtain a reaction product. 700 mL of the obtained reaction product was subjected to a hydrothermal treatment at 130 °C for 6 hours. After it was cooled, the whole amount of the reaction product was taken out and heated at 80°C, a 80°C aqueous solution containing 1.36 g of sodium stearate prepared in advance was added to the reaction product under agitation little by little, and the resulting mixture was kept for 30 minutes. Thereafter, solid-liquid separation was carried out by a nutsche filter, the obtained solid was rinsed with 800 mL of ion exchange water, and the obtained cake was dried at 105°C for 18 hours. The obtained dried product was ground with a hammer mill and sifted with a 150 $\mu$m filter.

The chemical formula of the obtained hydrotalcite particles was $Mg_{4.8}Al_2(CO_3)(OH)_{13.6} \cdot 3.4H_2O$. Table 1 shows the average secondary particle diameter, BET specific surface area and difference in molar ratio.

Comparative Synthesis Example 1 (hydrotalcite particles)

154 mL of a 1.5 mol/L aqueous solution of magnesium chloride and 120 mL of a 1 mol/L aqueous solution of liquid aluminum chloride were prepared in a glass beaker, and these solutions and a mixed solution prepared by mixing together 88 mL of a 8 mol/L aqueous solution of sodium hydroxide and 60 mL of a 1 mol/L aqueous solution of sodium carbonate were injected into a 1 L reactor containing a small amount of water at the same time under agitation so that the above aqueous solutions disappeared at the same time and the pH value became 9.5 so as to obtain a reaction product. 700 mL of the obtained reaction product was subjected to a hydrothermal treatment at 170°C for 6 hours. After it was cooled, the whole amount of the reaction product was taken out and heated at 80°C, a 80°C aqueous solution containing 0.55 g of sodium stearate prepared in advance was added to the reaction product under agitation little by little, and the resulting mixture was kept for 30 minutes. Thereafter, solid-liquid separation was carried out by a nutsche filter, the obtained solid was rinsed with 800 mL of ion exchange water, and the obtained cake was dried at 105°C for 18 hours. The obtained dried product was ground with a hammer mill and sifted with a 150 $\mu$m filter.

The chemical formula of the obtained hydrotalcite particles was $Mg_{3.9}Al_2(CO_3)(OH)_{11.7} \cdot 2.9H_2O$. Table 1 shows the average secondary particle diameter, BET specific surface area and difference in molar ratio.

Comparative Synthesis Example 2 (hydrotalcite particles)

160 mL of a 1.5 mol/L aqueous solution of magnesium chloride and 120 mL of a 1 mol/L aqueous solution of liquid aluminum chloride were prepared in a glass beaker, and these solutions and a mixed solution prepared by mixing together 90 mL of a 8 mol/L aqueous solution of sodium hydroxide and 60 mL of a 1 mol/L aqueous solution of sodium carbonate were injected into a 1 L reactor containing a small amount of water at the same time under agitation so that the above aqueous solutions disappeared at the same time and the pH value became 9.5 so as to obtain a reaction product. 700 mL of the obtained reaction product was subjected to a hydrothermal treatment at 170°C for 13 hours. After it was cooled, the whole amount of the reaction product was taken out and heated at 80°C, a 80°C aqueous solution containing 0.55 g of sodium stearate prepared in advance was added to the reaction product under agitation little by little, and the resulting mixture was kept for 30 minutes. Thereafter, solid-liquid separation was carried out by a nutsche filter, the obtained solid was rinsed with 800 mL of ion exchange water, and the obtained cake was dried at 105°C for 18 hours. The obtained dried product was ground with a hammer mill and sifted with a 150 $\mu$m filter.

The chemical formula of the obtained hydrotalcite particles was $Mg_{4.0}Al_2(CO_3)(OH)_{12.1}\cdot3.0H_2O$. Table 1 shows the average secondary particle diameter, BET specific surface area and difference in molar ratio.

Table 1

|  | S.Ex.1 | S.Ex.2 | C.S.Ex. 1 | C.S.Ex.2 |
|---|---|---|---|---|
| (1) Average secondary particle diameter ($\mu$m) | 0.26 | 0.28 | 0.85 | 0.56 |
| (2) BET specific surface area (m$^2$/g) | 17 | 21 | 11 | 8.2 |
| (3) Molar ratio obtained by chemical analysis | 5.93 | 4.79 | 3.85 | 4.04 |
| (4) Molar ratio obtained by X-ray diffraction method | 6.03 | 5.10 | 4.74 | 4.85 |
| (5) Difference between (3) and (4) | 0.10 | 0.31 | 0.89 | 0.81 |
| S.Ex.: Sythesis Example<br>C.S.Ex.: Comparative Synthesis Example | | | | |

Example 1 (resin composition, film)

4 g of the hydrotalcite particles obtained in Synthesis Example 1 and 36 g of LDPE manufactured by Sumitomo Chemical Co., Ltd. were kneaded together by using a Brabender plastomill at 130°C, and then a film was formed from the kneaded product by using a hydraulic compression molding machine at 160°C. The heat-retaining index and haze of the film are shown in Table 2.

Example 2 (resin composition, film)

4 g of the hydrotalcite particles obtained in Synthesis Example 2 and 36 g of LDPE manufactured by Sumitomo Chemical Co., Ltd. were kneaded together by using a Brabender plastomill at 130°C, and then a film was formed from the kneaded product by using a hydraulic compression molding machine at 160°C. The heat-retaining index and haze of the film are shown in Table 2.

Comparative Example 1 (resin composition, film)

4 g of the hydrotalcite particles obtained in Comparative Synthesis Example 1 and 36 g of LDPE manufactured by Sumitomo Chemical Co. , Ltd. were kneaded together by using a Brabender plastomill at 130°C, and then a film was formed from the kneaded product by using a hydraulic compression molding machine at 160°C. The heat-retaining index and haze of the film are shown in Table 2.

Comparative Example 2 (resin composition, film)

4 g of the hydrotalcite particles obtained in Comparative Synthesis Example 2 and 36 g of LDPE manufactured by Sumitomo Chemical Co. , Ltd. were kneaded together by using a Brabender plastomill at 130°C, and then a film was formed from the kneaded product by using a hydraulic compression molding machine at 160°C. The heat-retaining index and haze of the film are shown in Table 2.

Table 2

| | Example 1 | Example 2 | Comparative Example 1 | Comparative Example 2 |
|---|---|---|---|---|
| Hydrotalcite particles in use | Synthesis Example 1 | Synthesis Example 2 | Comparative Synthesis Example 1 | Comparative Synthesis Example 2 |
| Heat-retaining index | 69.33 | 65.72 | 63.82 | 64.37 |
| Haze | 5.7 | 6.2 | 10.1 | 11.0 |

Effect of the Invention

The resin composition of the present invention and the film thereof have an excellent heat-retaining property and transparency.

**Claims**

1. A resin composition comprising 100 parts by weight of a resin and 1 to 20 parts by weight of a heat-retaining agent, wherein the heat-retaining agent is represented by the following formula (1) and has a difference between the molar ratio obtained from $2\theta$ of the (110) plane by an X-ray diffraction method and the molar ratio obtained by chemical analysis of not more than 0.7 (the molar ratio is an $Mg/Al_2$ value).

$$Mg_XAl_2(OH)_{2X+4}(CO_3)\cdot mH_2O \qquad (1)$$

(In the above formula, X satisfies $4.0 < X \leqq 6.5$, and "m" is 0 or a positive number.)

2. An agricultural film made of the resin composition of claim 1.

3. A method of using a heat-retaining agent which is represented by the following formula (1) and has a difference between the molar ratio obtained from $2\theta$ of the (110) plane by an X-ray diffraction method and the molar ratio obtained by chemical analysis of not more than 0.7 as a heat-retaining agent for agricultural films (the molar ratio is an $Mg/Al_2$ value).

$$Mg_XAl_2(OH)_{2X+4}(CO_3)\cdot mH_2O \qquad (1)$$

(In the above formula, X satisfies $4.0 < X \leqq 6.5$, and "m" is 0 or a positive number.)

Fig. 1

## INTERNATIONAL SEARCH REPORT

International application No.

PCT/JP2013/080613

A. CLASSIFICATION OF SUBJECT MATTER
$C08K3/18$(2006.01)i, $A01G9/14$(2006.01)i, $C01F7/00$(2006.01)i, $C09K3/00$(2006.01)i

According to International Patent Classification (IPC) or to both national classification and IPC

B. FIELDS SEARCHED

Minimum documentation searched (classification system followed by classification symbols)
C08K3/18, A01G9/14, C01F7/00, C09K3/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-041223 A (Sumika Plastech Co., Ltd.), 12 February 2004 (12.02.2004), claim 1; paragraphs [0016], [0035] & DE 19545896 A & CN 1131501 A | 1-3 |
| X | JP 2004-244512 A (The Nippon Synthetic Chemical Industry Co., Ltd.), 02 September 2004 (02.09.2004), paragraphs [0033], [0034]; examples 3, 6 (Family: none) | 1-3 |
| X | JP 2007-166993 A (MKV Platech Co., Ltd.), 05 July 2007 (05.07.2007), claim 7; paragraph [0044]; examples 1 to 3 (Family: none) | 1-3 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 January, 2014 (09.01.14) | 21 January, 2014 (21.01.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/080613

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-002408 A  (Kyowa Chemical Industry Co., Ltd.),<br>09 January 2001 (09.01.2001),<br>claim 1; examples<br>& US 6418661 B1          & EP 1052223 A1<br>& WO 00/032515 A1        & CN 1289307 A | 1-3 |
| A | JP 08-217912 A  (Fuji Chemical Industry Co., Ltd.),<br>27 August 1996 (27.08.1996),<br>claim 1; examples<br>& EP 708056 A1 | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54060347 A
- JP 63118374 A
- JP 2006124229 A
- JP 2011068877 A
- JP 46002280 B
- US 3650704 A
- JP 47032198 B
- US 3879525 A
- JP 50020039 B
- JP 48029477 B
- JP 51029129 B